(19)

Europäisches
Patentamt
European
Patent Office
Office européen
des brevets

(11) **EP 4 779 982 A1**

(12) **EUROPEAN PATENT APPLICATION**

(43) Date of publication:
**22.07.2026 Bulletin 2026/30**

(21) Application number: **25152425.2**

(22) Date of filing: **17.01.2025**

(51) International Patent Classification (IPC):
***H04N 19/129*** (2014.01)   ***H04N 19/423*** (2014.01)
***H04N 19/635*** (2014.01)

(52) Cooperative Patent Classification (CPC):
**H04N 19/423; H04N 19/129; H04N 19/635**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **intoPIX s.a.**
**1348 Louvain-La-Neuve (BE)**

(72) Inventors:
• **DAMMAN GEEROMS, Corentin Aurélien
Sébastien
1950 Kraainem (BE)**
• **DE CONINCK, Adrien
1495 Marbais (BE)**
• **BUYSSCHAERT, Charles Daniel Nicole André
Sylvestre
1170 Bruxelles (BE)**

(74) Representative: **Gevers Patents
De Kleetlaan 7A
1831 Diegem (BE)**

(54) **METHOD AND APPARATUS FOR MEMORY-EFFICIENT ENCODING AND DECODING OF IMAGE DATA**

(57)    The present invention relates to a method for encoding an image (110) comprising image samples (111), the method for encoding comprising processing with an encoding module (130) respective lines (112) of image samples (111) for producing intermediate results and final results according to a lifting scheme (300) of a wavelet-type filter operation applied in a vertical direction, so as to reduce the amount of memory needed for encoding the image (110). The present invention also relates to an apparatus and a computer program for encoding the image (110), and to a method, apparatus and computer program for decoding an encoded image (210) obtainable by the method for encoding into a decoded image (250), wherein the decoding may be performed with a reduced amount of memory.

FIG. 1

**EP 4 779 982 A1**

**Description**

**Field of the invention**

The invention pertains to the field of image processing using decorrelative transforms, and in particular wavelet-type filter operations.

**Background of the invention**

An image processing algorithm such as an encoding of an image, or a decoding of an encoded image may apply a decorrelative transform running over a plurality of image lines. A decorrelative transform allows the entropy of a set of coefficients or image samples (terms known by one skilled in the art) to be reduced by concentrating probabilities of occurrence on a subset of coefficient values. A decorrelative transform may be for example a color transform, such as a reversible color transform (RCT), a temporal decorrelative transform based on interframe predictions, a discrete cosine transform (DCT), or a discrete wavelet transform (DWT).

An encoder or a decoder for processing image samples or coefficients using a decorrelative transform, and in particular using a wavelet-type filter operation, may require a memory for performing said processing. The memory may need to store a large amount of data, especially when the wavelet-type filter operation is applied in a vertical direction on respective lines of image samples. However, it may be difficult to store a large amount of data on a memory comprised in a device for encoding or decoding image data. Indeed, the size of said memory may be limited and/or said memory may be fragmented, such that a large contiguous portion of free memory is not available. Herein, "free memory" designates memory that does not contain data or that contains data that is no longer in use. Free memory may also be referred to as "available memory".

Therefore, there is a need for reducing the amount of memory required for a computer-implemented encoding or decoding of image samples, wherein the encoding or decoding comprises a wavelet-type filter operation applied in a vertical direction on respective lines of image samples.

**Summary of the invention**

It is an object of the present invention to address this need. To this end, there is provided a method, apparatus, and computer program for encoding an image comprising image samples using a wavelet-type filter operation applied in a vertical direction on respective lines of image samples, wherein said encoding may be performed with a reduced amount of memory. In addition, there is provided a method, apparatus, and computer program for decoding an encoded image obtainable by the method for encoding of the invention, wherein said decoding may be performed with a reduced amount of memory.

According to a first aspect of the invention, there is provided a computer-implemented method for encoding an image comprising image samples, the method for encoding comprising the steps of:

- providing an encoding module comprising an input line buffer, a number of intermediate line buffers and an output line buffer;
- grouping the image samples into respective lines of image samples, the respective lines forming a sequence of lines;
- providing the respective lines in the input line buffer;
- processing with the encoding module the respective lines for producing intermediate results and final results according to a lifting scheme of a wavelet-type filter operation applied in a vertical direction;
- storing the intermediate results in the intermediate line buffers;
- providing the final results in the output line buffer as respective sets of coefficients spatially related to the respective lines, the respective sets forming a sequence of sets;

wherein the number of intermediate line buffers is equal to the minimum number of intermediate line buffers required for producing the respective sets of coefficients according to the lifting scheme.

According to the method for encoding of the invention, one set of coefficients corresponds to one line of image samples.

The method for encoding according to the present invention allows image samples to be encoded with a reduced amount of memory in an encoding process comprising a wavelet-type filter operation applied in a vertical direction on respective lines of image samples.

Indeed, a memory comprising the line buffers of the encoding module may be reduced because the number of intermediate line buffers is equal to the minimum number of intermediate line buffers required for producing the respective sets of coefficients according to the lifting scheme. For example, said memory does not have to store all the lines of an image to be processed. Instead, said memory may only store a reduced number of image lines corresponding to the minimum number of image lines required for producing the respective sets of coefficients according to the lifting scheme.

An image before encoding may also be referred to herein as an "original image". An image after encoding may also be referred to herein as an "encoded image". An image reconstructed after decoding of an encoded image may also be referred to herein as a "decoded image".

Herein, a buffer is comprised in a memory. A buffer is therefore a subset of a memory. Herein, a memory may also designate a physical device able to store information, in particular binary information. Herein, the size of a buffer, or the size of a memory, is the total number of elements that can be stored in the buffer or the memory, respectively.

Advantageously, the performance of an encoder may be improved thanks to the method for encoding of the invention. Indeed, with a reduced amount of memory, there is a reduced risk of so-called "cache misses". As is commonly known, a cache miss occurs when a data requested by a system is not found in a cache memory. Instead, the system needs to retrieve the data from a slower memory, such as a main memory or a hard disk drive. A cache miss may reduce the performance of the system because accessing data from the slower memory takes more time compared to retrieving the data from the cache memory. In modern computer systems, there are several cache memories organized in several "levels", a lower-level cache memory being faster, but smaller, than a higher-level cache memory. When a data is not found in a lower-level cache memory, a cache miss occurs and the data needs to be retrieved from a higher-level, and therefore slower, cache memory. According to the invention, the amount of memory required to store the buffers of the encoding module may be reduced. This allows said buffers to be stored in a lower-level, and therefore faster, cache memory, thereby reducing the cache misses and thus increasing the performance of an encoder comprising the encoding module.

Furthermore, the method for encoding of the invention may allow existing coding techniques to be implemented in a more efficient manner. The JPEG XS standard is an example of an existing coding technique which may be implemented in a more efficient manner according to the method for encoding of the invention. The JPEG XS standard, formally known as ISO/IEC 21122, is an interoperable, visually lossless, low-latency, and lightweight image and video coding system. The JPEG XS standard is divided into several parts, each part specifying specific aspects of the standard. JPEG XS Part 1, formally known in its second edition as ISO/IEC 21122-1:2022, normatively defines how a compressed JPEG XS codestream can be transformed into a decoded image in a bit exact manner, a "codestream" being defined in the JPEG XS standard as a compressed image data representation that includes all necessary data to allow a (full or approximate) reconstruction of the sample values of a digital image. Moreover, JPEG XS Part 1 provides some key algorithms enabling an encoder to generate a JPEG XS codestream. Herein the expression "JPEG XS standard" generally designates the JPEG XS specification according to documents published under reference ISO/IEC 21122, including any part of said specification and any edition of said parts.

Preferably, a line buffer of the encoding module is able to store at least one line of image samples, more preferably exactly one line of image samples.

Preferably, the encoding module according to the invention is configured for processing the image line-by-line, i.e. processing one line at a time, in particular in a case where the input line buffer and/or the output line buffer has a size of one line of image samples.

The inventors propose several possible embodiments comprising optional features, where some of them can be combined.

In an embodiment, at least some of the respective lines provided in the input line buffer result from one or more prior operations, said one or more prior operations being performed before each of said respective lines is provided in the input line buffer. In other words, said one or more prior operations are performed before each of the at least some of the respective lines resulting from the one or more prior operations is provided in the input line buffer. Said prior operations may be performed in a pre-processing module able to provide data to the encoding module. An advantage of this embodiment is that data provided to the encoding module are likely to be located in a lower-level cache memory, thereby reducing the risk of cache miss and therefore increasing the performance of an encoder comprising the pre-processing module and the encoding module.

Preferably, all of the respective lines provided in the input line buffer result from one or more prior operations, said one or more prior operations being performed before each line of image samples in the sequence of lines is provided in the input line buffer.

Examples of said prior operations include, but are not limited to: decorrelative transforms, such as a reversible color transform (RCT), or a wavelet-type filter operation applied in a horizontal or vertical direction; conversion from user format to input line buffer format, such as a conversion from a user precision (e.g. 8 bits, 16 bits) to an input line buffer precision (e.g. 32 bits), an unpacking of bits from a user format to an input line buffer format, etc.

In an embodiment, at least some of the respective sets of coefficients are further processed in one or more subsequent operations, said one or more subsequent operations being performed after each of said respective sets of coefficients is provided in the output line buffer. In other words, said one or more subsequent operations are performed after each of the at least some of the respective sets further processed in the one or more subsequent operations is provided in the output line buffer. Said subsequent operations may be performed in a post-processing module able to receive data from the encoding module. An advantage of this embodiment is that said subsequent operations are performed on data that are likely to be located in a lower-level cache memory, thereby reducing the risk of cache miss and therefore increasing the performance of an encoder comprising the encoding module and the post-processing module.

Preferably, all of the respective sets of coefficients are further processed in one or more subsequent operations, said one or more subsequent operations being performed after each set of coefficients in the sequence of sets is provided in the output line buffer.

Examples of said subsequent operations include, but are not limited to: decorrelative transforms, such as a wavelet-type filter operation applied in a horizontal or vertical direction; operations for preparing an entropy encoding of a set of coefficients, such as a computation of bitplane counts of the set of coefficients as specified in a JPEG XS standard; operations for preparing a packing of a set of coefficients in packets.

Preferably, said prior and/or subsequent operations are interlaced with the processing of the data by the encoding module, i.e. the processing of the respective lines to produce the respective sets, such as to increase the probability that the processed data are located in a lower-level cache memory, thereby reducing the risk of cache miss and therefore increasing the performance of an encoder comprising the encoding module.

The pre-processing module, the encoding module and the post-processing module as used herein are software modules. Said modules should be interpreted as a way of distinguishing between different types of operations. Namely, the encoding module applies a wavelet-type filter operation on respective lines of image samples; the pre-processing module applies one or more prior operations as defined hereinbefore; and the post-processing module applies one or more subsequent operations as defined hereinbefore. Said modules may be comprised in a single system, i.e. the operations performed by said modules may be executed by a single processor. Said modules may also be comprised a distributed system, i.e. the operations performed by said modules may be executed by a plurality of processors.

In an embodiment, at least one of said prior or subsequent operations is an additional wavelet-type filter operation. Said additional wavelet-type filter operation may be applied in a horizontal or vertical direction. A wavelet-type filter operation applied in a horizontal direction is applied along a line of image samples or coefficients and may also be referred to herein as a "horizontal wavelet-type filter operation". A wavelet-type filter operation applied in a vertical direction is applied across lines of image samples or coefficients and may also be referred to herein as a "vertical wavelet-type filter operation". Said additional wavelet-type filter operation is preferably applied according to the lifting scheme.

In an embodiment, at least one of said subsequent operations is an operation for entropy encoding a set of coefficients. Entropy encoding generally designates techniques for reducing the size of a set of data, i.e. compressing a set of data. Known examples of entropy encoding techniques include Huffman coding, arithmetic coding, and Golomb codes, such as unary coding or Rice coding. Besides, JPEG XS Part 1 (ISO/IEC 21122-1:2022) specifies some types of entropy decoding and related encoding in its subclause C.6.

In an embodiment, after all data comprised in a buffer have been processed, said buffer is reused to store processed data. A buffer of this embodiment may be for instance a line buffer of the encoding module, such as an input line buffer, an intermediate line buffer, or an output line buffer. A buffer of this embodiment may also be a buffer of the pre-processing module or a buffer of the post-processing module. An advantage of this embodiment is to allow a more efficient use of available memory, by reusing already allocated memory rather than having to allocate additional memory. This embodiment allows limiting the size of a memory comprising the buffers. In addition, limiting the size of the memory comprising the buffers may reduce the risk of cache misses and may therefore improve the performance of an encoder comprising the encoding module. A particular case of this embodiment is the so-called "in-place" processing, wherein output data produced by a process are stored in the place of input data of the process, i.e. replace the input data in a buffer. In addition, this embodiment, its variants, and its advantages may apply *mutatis mutandis* to the method for decoding of the invention.

In an embodiment, the wavelet-type filter operation is a filter operation of the LeGall 5/3 type, and the number of intermediate line buffers is equal to two line buffers. A wavelet-type filter operation of the LeGall 5/3 type is a known type of Discrete Wavelet Transform (DWT) comprising a low-pass filter with a support of 5 coefficients and a high-pass filter with a support of 3 coefficients. A wavelet-type filter operation of the LeGall 5/3 type is also herein referred to as a "DWT 5/3 transform". The DWT 5/3 transform is used as a decorrelative transform in the JPEG XS standard, see e.g. subclause E.7 of JPEG XS Part 1 (ISO/IEC 21122-1:2022). Compared to other wavelet transforms, such as for example the DWT 9/7 transform used in JPEG 2000 (formally known as ISO/IEC 15444), the DWT 5/3 transform offers the following advantages. First, it is reversible because it uses only integer coefficients, so its output does not require rounding (quantization) and so it does not introduce any quantization noise. In addition, the low-pass and high-pass filters of the DWT 5/3 transform have a reduced support of only 5 and 3 coefficients, respectively. Finally, the DWT 5/3 transform may be implemented "in-place" according to a lifting scheme, thereby allowing it to be implemented with a reduced computational complexity and a reduced memory footprint. Namely, in the case of the DWT 5/3 transform applied in a vertical direction, the minimum number of buffered lines, or in other words the minimum number of intermediate lines of image samples, required for producing the respective sets of coefficients according to the lifting scheme is equal to two lines. This embodiment and its advantages may be applied *mutatis mutandis* to the method for decoding of the invention.

In an embodiment, the encoding of the image conforms with a JPEG XS standard.

According to a second aspect of the invention, there is provided a computer-implemented method for decoding an encoded image, wherein the encoded image comprises respective sets of coefficients forming a sequence of sets, the respective sets of coefficients being obtainable by a method for encoding comprising the step of:

- applying a wavelet-type filter operation in a vertical direction on respective lines of image samples for producing respective sets of coefficients spatially related to the respective lines of image samples;

wherein the method for decoding comprises the steps of:

- providing a decoding module comprising an input line buffer, a number of intermediate line buffers and an output line buffer;
- providing the respective sets of coefficients of the encoded image in the input line buffer;
- processing with the decoding module the respective sets of coefficients for producing intermediate results and final results according to a lifting scheme of an inverse wavelet-type filter operation applied in a vertical direction;
- storing the intermediate results in the intermediate line buffers;
- providing the final results in the output line buffer as respective decoded lines of image samples spatially related to the respective sets of coefficients, the respective decoded lines forming a sequence of decoded lines;

wherein the number of intermediate line buffers is equal to the minimum number of intermediate line buffers required for producing the respective decoded lines of image samples according to the lifting scheme.

Preferably, the encoded image is obtained according to the method for encoding of the invention.

The method for decoding according to the present invention allows respective sets of coefficients comprised in an encoded image to be decoded with a reduced amount of memory in a decoding process comprising an inverse wavelet-type filter operation applied in a vertical direction on said respective sets of coefficients.

Indeed, a memory comprising the line buffers of the decoding module may be reduced because the number of intermediate line buffers is equal to the minimum number of intermediate line buffers required for producing the respective decoded lines of image samples according to the lifting scheme. For example, said memory does not have to store all the respective sets of coefficients to be processed. Instead, said memory may only store a reduced number of sets of coefficients corresponding to the minimum number of sets of coefficients required for producing the respective decoded lines of image samples according to the lifting scheme.

Advantageously, the performance of a decoder may be improved thanks to the method for decoding of the invention. Indeed, with a reduced amount of memory, there is a reduced risk of so-called "cache misses". According to the invention, the amount of memory required to store the buffers of the decoding module may be reduced. This allows said buffers to be stored in a lower-level, and therefore faster, cache memory, thereby reducing the cache misses and thus increasing the performance of a decoder comprising the decoding module.

Preferably, a line buffer of the decoding module is able to store at least one set of coefficients, more preferably exactly one set of coefficients.

Preferably, the decoding module according to the invention is configured for processing the encoded image set-by-set, i.e. processing one set of coefficients at a time, in particular in a case where the input line buffer and/or the output line buffer has a size of one set of coefficients.

The method for encoding and the method for decoding are two aspects of the same invention, forming a single general inventive concept. Indeed, the steps of the method for decoding mirror the steps of the method for encoding in the reverse order. Therefore, all the possible embodiments and advantages of the method for encoding of the invention apply *mutatis mutandis* to the method for decoding of the invention.

In an embodiment, at least some of the respective sets of coefficients provided in the input line buffer result from one or more prior operations, said one or more prior operations being performed before each of said respective sets of coefficients is provided in the input line buffer. In other words, said one or more prior operations are performed before each of the at least some of the respective sets of coefficients resulting from the one or more prior operations is provided in the input line buffer. Said prior operations may be performed in a pre-processing module able to provide data to the decoding module. An advantage of this embodiment is that data provided to the decoding module are likely to be located in a lower-level cache memory, thereby reducing the risk of cache miss and therefore increasing the performance of a decoder comprising the pre-processing module and the decoding module.

Preferably, all of the respective sets of coefficients provided in the input line buffer result from one or more prior operations, said one or more prior operations being performed before each set of coefficients in the sequence of sets is provided in the input line buffer.

Examples of said prior operations include, but are not limited to: inverse decorrelative transforms, such as an inverse wavelet-type filter operation applied in a horizontal or vertical direction; operations for entropy decoding a set of coefficients, such as decoding a set of coefficients based on bitplane count and data subpackets as specified in a JPEG XS standard; operations for unpacking a set of coefficients from a packet.

In an embodiment, at least some of the respective decoded lines of image samples are further processed in one or more subsequent operations, said one or more subsequent operations being performed after each of said respective decoded lines is provided in the output line buffer. In other words, said one or more subsequent operations are performed after each of the at least some of the respective decoded lines further processed in the one or more subsequent operations is provided in the output line buffer. Said subsequent operations may be performed in a post-processing module able to receive data from the decoding module. An advantage of this embodiment is that said subsequent operations are performed on data that are likely to be located in a lower-level cache memory, thereby reducing the risk of cache miss and therefore increasing the performance of a decoder comprising the decoding module and the post-processing module.

Preferably, all of the respective decoded lines of image samples are further processed in one or more subsequent operations, said one or more subsequent operations being performed after each decoded line in the sequence of decoded lines is provided in the output line buffer.

Examples of said subsequent operations include, but are not limited to: inverse decorrelative transforms, such as an inverse reversible color transform (IRCT), or an inverse wavelet-type filter operation applied in a horizontal or vertical direction; conversion from output line buffer format to user format, such as a conversion from an output line buffer precision (e.g. 32 bits) to a user precision (e.g. 8 bits, 16 bits), a packing of bits from an output line buffer format to a user format, etc.

Preferably, said prior and/or subsequent operations are interlaced with the processing of the data by the decoding module, i.e. the processing of the respective sets to produce the respective decoded lines, such as to increase the probability that the processed data are located in a lower-level cache memory, thereby reducing the risk of cache miss and therefore increasing the performance of a decoder comprising the decoding module.

The pre-processing module, the decoding module and the post-processing module as used herein are software modules. Said modules should be interpreted as a way of distinguishing between different types of operations. Namely, the decoding module applies an inverse wavelet-type filter operation on respective sets of coefficients; the pre-processing module applies one or more prior operations as defined hereinbefore; and the post-processing module applies one or more subsequent operations as defined hereinbefore. Said modules may be comprised in a single system, i.e. the operations performed by said modules may be executed by a single processor. Said modules may also be comprised a distributed system, i.e. the operations performed by said modules may be executed by a plurality of processors.

In an embodiment, at least one of said prior or subsequent operations is an additional inverse wavelet-type filter operation. Said additional inverse wavelet-type filter operation may be applied in a horizontal or vertical direction. An inverse wavelet-type filter operation applied in a horizontal direction is applied along a line of coefficients and may also be referred to herein as a "horizontal inverse wavelet-type filter operation". An inverse wavelet-type filter operation applied in a vertical direction is applied across lines of coefficients and may also be referred to herein as a "vertical inverse wavelet-type filter operation". Said additional inverse wavelet-type filter operation is preferably applied according to the lifting scheme.

In an embodiment, at least one of said prior operations is an operation for entropy decoding a set of coefficients. Preferably, said entropy decoding is an entropy decoding specified in a JPEG XS standard, such as a decoding of a set of coefficients based on bitplane count and data subpackets.

In an embodiment, after all data comprised in a buffer have been processed, said buffer is reused to store processed data. A buffer of this embodiment may be for instance a line buffer of the decoding module, such as an input line buffer, an intermediate line buffer, or an output line buffer. A buffer of this embodiment may also be a buffer of the pre-processing module or a buffer of the post-processing module.

In an embodiment, the inverse wavelet-type filter operation is an inverse filter operation of the LeGall 5/3 type, and the number of intermediate line buffers is equal to two line buffers.

In an embodiment, the decoding of the encoded image conforms with a JPEG XS standard.

According to a third aspect of the invention, there is provided a computer program comprising instructions which, when the program is executed by a computer, cause the computer to carry out a method for encoding or for decoding according to the invention.

In an embodiment, there is provided a non-transitory recording medium having recorded therein an encoding program that causes a processor to execute a method for encoding according to the invention.

In an embodiment, there is provided a non-transitory recording medium having recorded therein a decoding program that causes a processor to execute a method for decoding according to the invention.

According to a fourth aspect of the invention, there is provided an encoder comprising an encoding module, the encoding module comprising an input line buffer, a number of intermediate line buffers and an output line buffer, the encoder being configured for performing a method for encoding according to the invention.

Preferably, the encoder further comprises a processor for processing data and a memory, said line buffers being comprised, or in other words stored, in said memory, i.e. said memory being configured for storing said line buffers.

According to a fifth aspect of the invention, there is provided a decoder comprising a decoding module, the decoding module comprising an input line buffer, a number of intermediate line buffers and an output line buffer, the decoder being configured for performing a method for decoding according to the invention.

Preferably, the decoder further comprises a processor for processing data and a memory, said line buffers being comprised, or in other words stored, in said memory, i.e. said memory being configured for storing said line buffers.

Processing an image according to the method for encoding of the invention does not necessarily imply a compression of said image, i.e. a reduction of the number of bits required to store said image or a representation of said image. Similarly, processing an encoded image according to the method for decoding of the invention does not necessarily imply a decompression of said encoded image.

All the possible embodiments and advantages of the first aspect of the invention apply *mutatis mutandis* to other aspects of the invention.

**Brief description of the figures**

For a better understanding of the present invention, reference will now be made, by way of example, to the accompanying drawings in which:

- Fig. 1 schematically represents an encoder for encoding an image;
- Fig. 2 schematically represents a decoder for decoding an encoded image;
- Fig. 3 is a schematic representation of a lifting scheme implementation of a wavelet-type filter operation of the LeGall 5/3 type in a forward way;
- Fig. 4 is a schematic representation of a lifting scheme implementation of a wavelet-type filter operation of the LeGall 5/3 type in an inverse way;
- Fig. 5 schematically represents a decomposition of an image into subbands in a cascade of wavelet-type filter operations.

The figures are not drawn to scale. Generally, identical or analogous elements are denoted by the same reference numerals or letters in the figures.

**Detailed description of some embodiments of the invention**

The present invention will be described with respect to particular embodiments and with reference to certain drawings but the invention is not limited thereto. The described functions are not limited by the described structures. The drawings described are only schematic and are non-limiting. In the drawings, the size of some of the elements may be exaggerated and not drawn to scale for illustrative purposes.

Use of the verb "to comprise", as well as the respective variants and conjugations, does not exclude the presence of elements other than those stated. Use of the article "a", "an" or "the" preceding an element does not exclude the presence of a plurality of such elements.

The terms "first", "second", "third" and the like, in the description and in the claims, are used for distinguishing between similar elements and not necessarily for describing a sequential or chronological order. The terms are interchangeable under appropriate circumstances and the embodiments of the invention can operate in other sequences than described or illustrated herein.

Furthermore, embodiments referred to as "preferred" are to be construed as exemplary manners in which the invention may be implemented rather than as limiting the scope of the invention.

Herein, a "processor" generally designates a device able to execute computer instructions, such as for example a (micro)processor for a computer, which is also known as a central processing module (CPU), or a graphics processing module (GPU). A register of a processor, also referred to herein as a "processor register", is a high-speed memory built into a processor for quick data access. A processor register is an example of a cache memory.

Cache memories may be organized in several levels, a lower-level cache memory being faster, but smaller, than a higher-level cache memory. When a data is not found in a lower-level cache memory, a cache miss occurs and the data needs to be retrieved from a higher-level, and therefore slower, cache memory. The level of a cache memory may be designated by a number, a lower number designated a lower level. As an example, a modern processor may comprise three levels of cache memories, respectively denoted as "Level 1", "Level 2", and "Level 3" cache memories, or L1, L2, and L3 caches for short. Table 1 provides examples of sizes of such cache memories for a modern processor, along with the number of lines of image samples that may be stored in each of said cache memories. The sizes of caches memories provided in Table 1 are given in KiB and MiB, which respectively designate "kibibytes", i.e. 1024 bytes, and "mebibytes", i.e. 1024 kibibytes, with a byte comprising 8 bits. In order to compute the number of lines of image samples stored in each cache memory of Table 1, the case of an image with a resolution of 3840 x 2160 pixels is considered, with each pixel comprising 3 color components. Said resolution is also commonly known as a "4K UHD resolution". In a case where the 3 color components of each pixel are provided together at the input of an encoding module and/or at the output of a decoding module, said components are preferably processed together so as to remain contiguous in memory. This is the case considered in Table 1. In this case, a line of image samples provided to an encoding module has a size of 3 components * 3840 samples/component * 32 bits/sample = 45 KiB. Similarly, a set of coefficients provided to a decoding module has a size of 3 components * 3840 coefficients/component * 32 bits/coefficient = 45 KiB, since a set of coefficients is spatially related to a line of image samples.

Table 1 - Capacity of L1, L2, and L3 cache memories on a modern multicore processor

| Type of cache memory | Size | Number of lines stored |
| --- | --- | --- |
| L1 cache | 80 KiB per core | 1 |
| L2 cache | 1280 KiB per core | 28 |
| L3 cache | 24 MiB shared between cores | 546 |

According to the invention, the lines of image samples or the sets of coefficients may be stored in a lower-level cache memory, such as a L2 cache or even a L1 cache, thereby improving the performance of an encoding module or a decoding module by reducing cache misses. Indeed, as shown in Table 1, it may not be possible to store a whole image such as a 4K UHD image in a cache memory. However, the line buffers of the encoding module or the decoding module may fit in a cache memory, thereby improving the performance of said modules by reducing cache misses, and thus improving the overall performance of an encoder or a decoder.

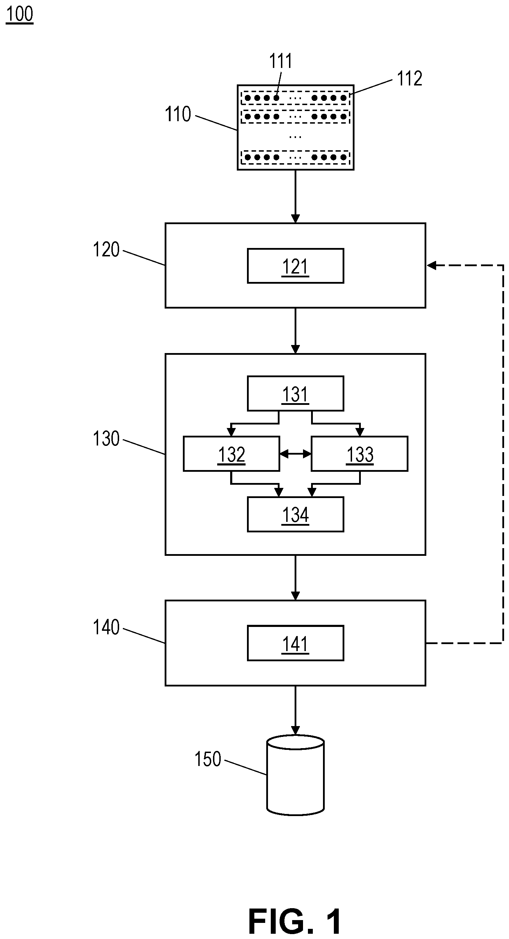

Fig. 1 schematically represents an encoder 100 for encoding an image 110 into an encoded image 150 according to an embodiment of the invention. The image 110 comprises a plurality of image samples 111 grouped into respective lines 112 of image samples 111. The encoded image 150 comprises respective sets of coefficients spatially related to the respective lines 112. Fig. 1 provides a block diagram of the encoder 100. The encoder 100 may be configured for performing the method for encoding of the invention. The encoder 100 may comprise a pre-processing module 120. The pre-processing module 120 may comprise a pre-processing buffer 121. The pre-processing module 120 may perform one or more prior operations. The encoder 100 may comprise an encoding module 130. The encoding module 130 may comprise an input line buffer 131. The encoding module 130 may comprise a plurality of intermediate line buffers 132, 133. The encoding module 130 may comprise an output line buffer 134. The encoding module 130 may process the respective lines 112 of image samples 111 for producing the respective sets of coefficients spatially related to the respective lines 112. The encoder 100 may comprise a post-processing module 140. The post-processing module 140 may comprise a post-processing buffer 141. The post-processing module 140 may perform one or more subsequent operations.

The encoder 100 operates as follows. The encoder 100 receives an image 110 comprising respective lines 112 of image samples 111. One or more prior operations may be applied on at least some of the respective lines 112 in the pre-processing module 120. Said respective lines 112 may be stored in the pre-processing buffer 121 before or after said prior operations. The encoding module 130 then receives the respective lines 112. The respective lines 112 provided to the encoding module 130 are stored in the input line buffer 131. The encoding module 130 processes the respective lines 112 for producing intermediate results and final results according to a lifting scheme of a wavelet-type filter operation. The encoding module 130 may apply said wavelet-type filter operation in a vertical direction. The intermediate results are stored in the intermediate line buffers 132, 133. The final results are provided in the output line buffer 134 as respective sets of coefficients spatially related to the respective lines 112. One or more subsequent operations may be applied on at least some of the respective sets of coefficients in the post-processing module 140. Said respective sets of coefficients may be stored in the post-processing buffer 141 before or after said subsequent operations. Said respective sets of coefficients may be further processed in the encoder 100 by being provided back to the pre-processing module 120, as indicated by the dashed arrow in Fig. 1. An example of said further processing is when a cascade of wavelet-type filter operations is performed in the encoder 100, wherein at least some of the respective sets of coefficients are further processed in one or more additional wavelet-type filter operations. Finally, an encoded image 150 is produced, which comprises the respective sets of coefficients.

The encoder 100 may be comprised in a data processing device able to process image or video data, such as a computer. The encoder 100 may compress the encoded image 150, i.e. reduce the size of the encoded image 150 compared to the original image 110. Said compression may enable the data processing device to store the encoded image 150 in a memory in a more efficient manner. In addition, said compression may enable the data processing device to transfer the encoded image 150 to another data processing device in a more efficient manner, for example via a communication channel that may be provided by a network.

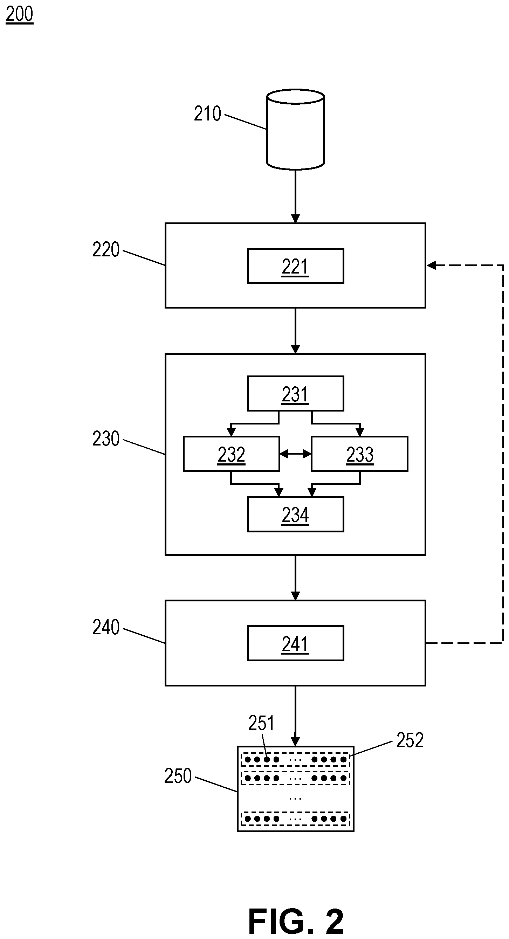

Fig. 2 schematically represents a decoder 200 for decoding an encoded image 210 into a decoded image 250 according to an embodiment of the invention. The encoded image 210 comprises a plurality of coefficients grouped into respective sets of coefficients. The encoded image 210 of Fig. 2 may be for instance the encoded image 150 of Fig. 1. The decoded image 250 comprises a plurality of image samples 251 grouped into respective decoded lines 252 of image samples 251. The respective decoded lines 252 are spatially related to the respective sets of coefficients of the encoded image 210. Fig. 2 provides a block diagram of the decoder 200. The decoder 200 may be configured for performing the method for decoding of the invention. The decoder 200 may comprise a pre-processing module 220. The pre-processing module 220 may comprise a pre-processing buffer 221. The pre-processing module 220 may perform one or more prior operations. The decoder 200 may comprise a decoding module 230. The decoding module 230 may comprise an input line buffer 231. The decoding module 230 may comprise a plurality of intermediate line buffers 232, 233. The decoding module 230 may comprise an output line buffer 234. The decoding module 230 may process the respective sets of coefficients for producing the respective decoded lines 252 of image samples 251. The decoder 200 may comprise a post-processing module 240. The post-processing module 240 may comprise a post-processing buffer 241. The post-processing module 240 may perform one or more subsequent operations.

The decoder 200 operates as follows. The decoder 200 receives an encoded image 210 comprising respective sets of coefficients. One or more prior operations may be applied on at least some of the respective sets of coefficients in the pre-processing module 220. Said respective sets of coefficients may be stored in the pre-processing buffer 221 before or after said prior operations. The decoding module 230 then receives the respective sets of coefficients. The respective sets of coefficients provided to the decoding module 230 are stored in the input line buffer 231. The decoding module 230 processes the respective sets of coefficients for producing intermediate results and final results according to a lifting scheme of an inverse wavelet-type filter operation. The decoding module 230 may apply said inverse wavelet-type filter operation in a vertical direction. The intermediate results are stored in the intermediate line buffers 232, 233. The final results are provided in the output line buffer 234 as respective decoded lines 252 of image samples 251 spatially related to the respective sets of coefficients. One or more subsequent operations may be applied on at least some of the respective decoded lines 252 in the post-processing module 240. Said respective decoded lines 252 may be stored in the post-processing buffer 241 before or after said subsequent operations. Said respective decoded lines 252 may be further processed in the decoder 200 by being provided back to the pre-processing module 220, as indicated by the dashed arrow in Fig. 2. An example of said further processing is when a cascade of inverse wavelet-type filter operations is performed in the decoder 200, wherein at least some of the respective decoded lines 252 are further processed in one or more additional inverse wavelet-type filter operations. Finally, a decoded image 250 is produced, which comprises the respective decoded lines 252 of image samples 251.

The decoder 200 may be comprised in a data processing device able to process image or video data, such as a computer. The encoded image 210 may be compressed, i.e. having its size reduced compared to an original image. In this case, the decoder 200 may enable the encoded image 210 to be decompressed into a decoded image 250 similar to the original image. Compressing the encoded image 210 may enable the data processing device to retrieve the encoded image 210 from a memory in a more efficient manner. In addition, compressing the encoded image 210 may enable the data processing device to receive the encoded image 210 from another data processing device in a more efficient manner, for example via a communication channel that may be provided by a network.

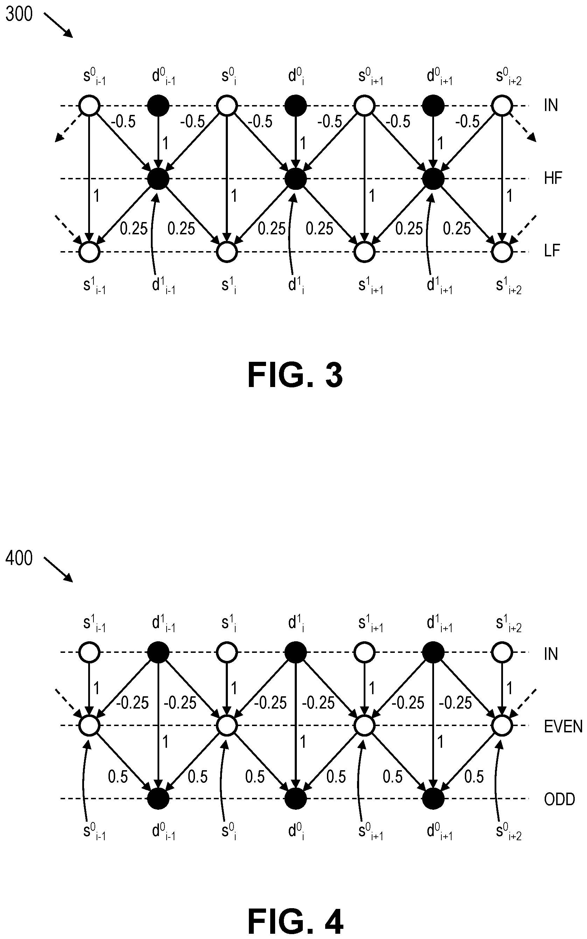

Fig. 3 is a schematic representation of a lifting scheme implementation 300 of a wavelet-type filter operation of the LeGall 5/3 type in a forward way. The lifting scheme 300 of Fig. 3 is an example of the lifting scheme of the wavelet-type filter operation applied in the encoding module 130. For the sake of conciseness, the wavelet-type filter operation of the LeGall 5/3 type in a forward way is hereinafter referred to as "FDWT 5/3 filtering". Said FDWT 5/3 filtering comprises a so-called "prediction step" producing high-frequency (HF) outputs and a so-called "update step" producing low-frequency (LF) outputs. Said steps are computed according to the following equations:

$$d^1_i = d^0_i - 0.5^*(s^0_i + s^0_{i+1}) \qquad (HF)$$

$$s^1_i = s^0_i + 0.25^*(d^1_{i-1} + d^1_i) \qquad (LF)$$

The FDWT 5/3 filtering operation is applied to a series of even and odd input samples, which are represented as an upper row of circles in Fig. 3, said row being denoted as "IN". Black circles in the IN row of Fig. 3 represent odd input samples, for which a high-frequency output is computed according to the HF equation above and as represented in a middle row of circles in Fig. 3, said row being denoted as "HF". White circles in the IN row of Fig. 3 represent even input samples, for which a low-frequency output is computed according to the LF equation above and as represented in a lower row of circles in Fig. 3, said row being denoted as "LF". Numbers next to arrows in Fig. 3 represent weighting factors according to the HF and LF equations above. Dashed arrows in Fig. 3 indicate that the series of input and output samples may comprise additional samples not represented in Fig. 3. Horizontal dashed lines highlight the respective upper, middle, and lower rows of Fig. 3.

Fig. 4 is a schematic representation of a lifting scheme implementation 400 of a wavelet-type filter operation of the LeGall 5/3 type in an inverse way. The lifting scheme 400 of Fig. 4 is an example of the lifting scheme of the inverse wavelet-type filter operation applied in the decoding module 230. For the sake of conciseness, the wavelet-type filter operation of the LeGall 5/3 type in an inverse way is hereinafter referred to as "IDWT 5/3 filtering". Said IDWT 5/3 filtering reverses the HF and LF equations of the FDWT 5/3 filtering according to the following equations:

$$s^0_i = s^1_i - 0.25^*(d^1_{i-1} + d^1_i) \qquad \text{(EVEN)}$$

$$d^0_i = d^1_i + 0.5^*(s^0_i + s^0_{i+1}) \qquad \text{(ODD)}$$

The IDWT 5/3 filtering is applied on high-frequency and low-frequency output samples produced by a FDWT 5/3 filtering, which are represented as an upper row of circles in Fig. 4, said row being denoted as "IN". White circles in the IN row of Fig. 4 represent low-frequency samples, for which an even output is computed according to the EVEN equation above and as represented in a middle row of circles in Fig. 4, said row being denoted as "EVEN". Black circles in the IN row of Fig. 4 represent high-frequency samples, for which an odd output is computed according to the ODD equation above and as represented in a lower row of circles in Fig. 4, said row being denoted as "ODD". Numbers next to arrows in Fig. 4 represent weighting factors according to the EVEN and ODD equations above. Dashed arrows in Fig. 4 indicate that the series of input and output samples may comprise additional samples not represented in Fig. 4. Horizontal dashed lines highlight the respective upper, middle, and lower rows of Fig. 4.

Table 2 illustrates a FDWT 5/3 filtering operation applied according to the lifting scheme 300 of Fig. 3. Said filtering operation may generally be applied in a horizontal or vertical direction. However, Table 2 particularly illustrates the case of a FDWT 5/3 filtering operation applied in a vertical direction. Said case is an example of the wavelet-type filter operation applied in the encoding module 130 for producing intermediate results and final results.

Table 3 illustrates an IDWT 5/3 filtering operation applied according to the lifting scheme 400 of Fig. 4. Said filtering operation may generally be applied in a horizontal or vertical direction. However, Table 3 particularly illustrates the case of an IDWT 5/3 filtering operation applied in a vertical direction. Said case is an example of the inverse wavelet-type filter operation applied in the decoding module 230 for producing intermediate results and final results.

Tables 2 and 3 share a similar structure. The leftmost column ("Row") is present for indicative purposes only and is used to reference rows of Tables 2 and 3. The "Phase" column indicates the different phases of the encoding or decoding, which are described below. The remaining columns indicate the content of the input line buffer, the intermediate line buffers, and the output line buffer, respectively. Since Tables 2 and 3 illustrate a wavelet-type filter operation of the LeGall 5/3 type, the number of intermediate line buffers is equal to two line buffers, which corresponds to the minimum number of intermediate line buffers required for producing the respective sets of coefficients or the respective decoded lines 252 according to the lifting schemes 300 or 400, respectively.

The encoding or decoding of an image according to the lifting scheme 300 or 400, respectively, will now be described. First, an initialization phase is executed once for starting the encoding or decoding of the image. This initialization phase corresponds to rows 1 to 3 of Tables 2 and 3. Then, a regime phase takes place, which corresponds to rows 4 and 5 of Tables 2 and 3. The regime phase is executed a number n of times. This number n is linked to the number L of lines in the image to be encoded or decoded by the following relationship: n = floor((L - 4) / 2), wherein the "floor(x)" function takes as input a number x and gives as output the greatest integer less than or equal to x. Then, a closing phase is executed once, during which the input line buffer and the intermediate line buffers are flushed. Depending on the parity of the number L of lines in the image to be encoded or decoded, either a first closing phase or a second closing phase is executed. The first closing phase is executed when L is even. This first closing phase corresponds to rows 6 to 8 of Tables 2 and 3. The second closing phase is executed when L is odd. This second closing phase corresponds to rows 9 to 12 of Tables 2 and 3.

Each row of the Tables 2 and 3 corresponds to the processing of one line 112 of image samples 111 by the encoding module 130 or of one set of coefficients by the decoding module 230, respectively. As shown in Tables 2 and 3, data shift from one buffer to another during the processing of the respective lines 112 of image samples 111 or the respective sets of coefficients. More precisely, new data (respective lines or respective sets) are first stored in the input line buffer. Then, data shift from the input line buffer to the first intermediate line buffer, then from the first intermediate line buffer to the second intermediate line buffer, and finally from the second intermediate line buffer to the output buffer. This allows processing the respective lines 112 or the respective sets with a reduced amount of memory according to the lifting schemes 300 or 400, respectively.

Table 2 - FDWT 5/3 filtering applied according to the lifting scheme 300 of Fig. 3

| Row | Phase | Input Line Buffer (131) | Intermediate Line Buffer 1 (132) | Intermediate Line Buffer 2 (133) | Output Line Buffer (134) |
|---|---|---|---|---|---|
| 1 | init | L0 | L0 | - | - |
| 2 | | L1 | L1 - L0/2 | L0 | - |
| 3 | | L2 | L2 | High1 = L1 - L0/2 - L2/2 | Low0 = L0 + 2*High1/4 |
| 4 | regime (n times) | L3 | L3 - L2/2 | L2 + High1/4 | High1 |
| 5 | | L4 | L4 | High3 = L3 - L2/2 - L4/2 | Low2 = L2 + High 1/4 + High3/4 |
| 6 | closing for L even | L5 (2n + 3) | L5 - 2*L4/2 | L4 + High3/4 | High3 |
| 7 | | - (end even) | - | High5 = L5 - 2*L4/2 | Low4 = L4 + High3/4 + High5/4 |
| 8 | | - (end odd) | - | - | High5 |
| 9 | closing for L odd | L5 | L5 - L4/2 | L4 + High3/4 | High3 |
| 10 | | L6 (2n + 4) | L6 | High5 = L5 - L4/2 - L6/2 | Low4 = L4 + High3/4 + High5/4 |
| 11 | | - (end odd) | - | L6 + 2*High5/4 | High5 |
| 12 | | - (end even) | - | - | Low6 = L6 + 2*High5/4 |

Table 3 - IDWT 5/3 filtering applied according to the lifting scheme 400 of Fig. 4

| Row | Phase | Input Line Buffer (231) | Intermediate Line Buffer 1 (232) | Intermediate Line Buffer 2 (233) | Output Line Buffer (234) |
|---|---|---|---|---|---|
| 1 | init | Low0 | Low0 | - | - |
| 2 | | High1 | High1 | L0 = Low0 - 2*High1/4 | - |
| 3 | | Low2 | Low2 - High1/4 | High1 + L0/2 | L0 |
| 4 | regime (n times) | High3 | High3 | L2 = Low2 - High1/4 - High3/4 | L1 = High1 + L0/2 + L2/2 |
| 5 | | Low4 | Low4 - High3/4 | High3 + L2/2 | L2 |
| 6 | closing for L even | High5 (2n + 3) | High5 | L4 = Low4 - High3/4 - High5/4 | L3 = High3 + L2/2 + L4/2 |
| 7 | | - (end even) | - | High5 + 2*L4/2 | L4 |
| 8 | | - (end odd) | - | - | L5 = High5 + 2*L4/2 |
| 9 | closing for L odd | High5 | High5 | L4 = Low4 - High3/4 - High5/4 | L3 = High3 + L2/2 + L4/2 |
| 10 | | Low6 (2n + 4) | Low6 - 2*High5/4 | High5 + L4/2 | L4 |
| 11 | | - (end odd) | - | L6 = Low6 - 2*High5/4 | L5 = High5 + L4/2 + L6/2 |
| 12 | | - (end even) | - | - | L6 |

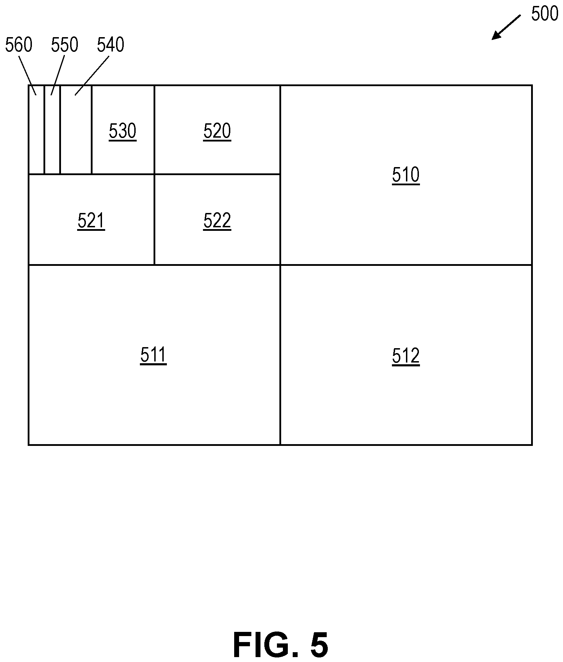

Fig. 5 schematically represents a decomposition of an image into subbands in a cascade of wavelet-type filter operations. The image may be for instance the image 110 of Fig. 1. The decomposed image 500 comprises so-called subbands 510-560. Generally, the wavelet-type filter operations may comprise any wavelet-type filter. In the particular case illustrated in Fig. 5, the image has been decomposed using two vertical and five horizontal FDWT 5/3 decomposition levels. In other words, the cascade of wavelet-type filter operations applied on the image for obtaining the decomposed image 500 comprises two wavelet-type filter operations of the LeGall 5/3 type applied in a vertical direction and five wavelet-type filter operations of the LeGall 5/3 type applied in a horizontal direction. In said cascade of wavelet-type filter operations, a wavelet-type filter operation applied in a vertical direction is followed by a wavelet-type filter operation applied in a horizontal direction. Similarly, a wavelet-type filter operation applied in a horizontal direction is followed by a wavelet-type filter operation applied in a vertical direction, unless there are no more such vertical operation to be performed, in which case the wavelet-type filter operation applied in a horizontal direction is followed by another wavelet-type filter operation applied in a horizontal direction.

On Fig. 5, the coefficients resulting from the cascade of wavelet-type filter operations have been grouped together based on the type of the subband they belong to. Other ways of grouping the coefficients are possible. The types of the subbands are listed in Table 4.

Table 4 - Types of the subbands in Fig. 5

| Reference sign | Subband frequency type in the horizontal direction | Subband frequency type in the vertical direction | Subband type (short name) |
| --- | --- | --- | --- |
| 510 | High | Low | HL0 |
| 511 | Low | High | LH0 |
| 512 | High | High | HH0 |
| 520 | High | Low | HL1 |
| 521 | Low | High | LH1 |
| 522 | High | High | HH1 |
| 530 | High | Low | HL2 |
| 540 | High | Low | HL3 |
| 550 | High | Low | HL4 |
| 560 | Low | Low | LL4 |

Finally, the decomposed image 500 may be recomposed by applying a cascade of inverse wavelet-type filter operations in the reverse order as the cascade of (forward) wavelet-type filter operations applied for obtaining the decomposed image 500.

In summary, the present invention relates to a method for encoding an image 110 comprising image samples 111, the method for encoding comprising processing with an encoding module 130 respective lines 112 of image samples 111 for producing intermediate results and final results according to a lifting scheme 300 of a wavelet-type filter operation applied in a vertical direction, so as to reduce the amount of memory needed for encoding the image 110. The present invention also relates to an apparatus and a computer program for encoding the image 110, and to a method, apparatus and computer program for decoding an encoded image 210 obtainable by the method for encoding into a decoded image 250, wherein the decoding may be performed with a reduced amount of memory.

Although the present invention has been described herein with respect to particular embodiments, it will readily be appreciated by a person skilled in the art that the present disclosure is not limited by what has been particularly shown and/or described and that alternatives, modified embodiments, or combined embodiments could be developed in the light of the overall teaching of this disclosure.

**Claims**

1.  A computer-implemented method for encoding an image (110) comprising image samples (111), the method for encoding comprising the steps of:

    - providing an encoding module (130) comprising an input line buffer (131), a number of intermediate line buffers (132, 133) and an output line buffer (134);
    - grouping the image samples (111) into respective lines (112) of image samples (111), the respective lines (112) forming a sequence of lines;
    - providing the respective lines (112) in the input line buffer (131);
    - processing with the encoding module (130) the respective lines (112) for producing intermediate results and final results according to a lifting scheme (300) of a wavelet-type filter operation applied in a vertical direction;
    - storing the intermediate results in the intermediate line buffers (132, 133);
    - providing the final results in the output line buffer (134) as respective sets of coefficients spatially related to the respective lines (112), the respective sets forming a sequence of sets;

wherein the number of intermediate line buffers (132, 133) is equal to the minimum number of intermediate line buffers (132, 133) required for producing the respective sets of coefficients according to the lifting scheme (300).

2. Method according to the preceding claim, wherein at least some of the respective lines (112) provided in the input line buffer (131) result from one or more prior operations, said one or more prior operations being performed before each of said respective lines (112) is provided in the input line buffer (131).

3. Method according to any of the preceding claims, wherein at least some of the respective sets of coefficients are further processed in one or more subsequent operations, said one or more subsequent operations being performed after each of said respective sets of coefficients is provided in the output line buffer (134).

4. Method according to any of claims 2 or 3, wherein at least one of said prior or subsequent operations is an additional wavelet-type filter operation.

5. Method according to any of claims 3 or 4, wherein at least one of said subsequent operations is an operation for entropy encoding a set of coefficients.

6. Method according to any of the preceding claims, wherein, after all data comprised in a buffer (121, 131, 132, 133, 134, 141) have been processed, said buffer (121, 131, 132, 133, 134, 141) is reused to store processed data.

7. Method according to any of the preceding claims, wherein the wavelet-type filter operation is a filter operation of the LeGall 5/3 type, and wherein the number of intermediate line buffers (132, 133) is equal to two line buffers.

8. Method according to any of the preceding claims, wherein the encoding of the image conforms with a JPEG XS standard.

9. A computer-implemented method for decoding an encoded image (210), wherein the encoded image (210) comprises respective sets of coefficients forming a sequence of sets, the respective sets of coefficients being obtainable by a method for encoding comprising the step of:

   - applying a wavelet-type filter operation in a vertical direction on respective lines (112) of image samples (111) for producing respective sets of coefficients spatially related to the respective lines (112) of image samples (111);

   wherein the method for decoding comprises the steps of:

   - providing a decoding module (230) comprising an input line buffer (231), a number of intermediate line buffers (232, 233) and an output line buffer (234);
   - providing the respective sets of coefficients of the encoded image (210) in the input line buffer (231);
   - processing with the decoding module (230) the respective sets of coefficients for producing intermediate results and final results according to a lifting scheme (400) of an inverse wavelet-type filter operation applied in a vertical direction;
   - storing the intermediate results in the intermediate line buffers (232, 233);
   - providing the final results in the output line buffer (234) as respective decoded lines (252) of image samples (251) spatially related to the respective sets of coefficients, the respective decoded lines (252) forming a sequence of decoded lines;

   wherein the number of intermediate line buffers (232, 233) is equal to the minimum number of intermediate line buffers (232, 233) required for producing the respective decoded lines (252) of image samples (251) according to the lifting scheme (400).

10. Method according to the preceding claim, wherein at least some of the respective sets of coefficients provided in the input line buffer (231) result from one or more prior operations, said one or more prior operations being performed before each of said respective sets of coefficients is provided in the input line buffer (231).

11. Method according to any of claims 9 or 10, wherein at least some of the respective decoded lines (252) of image samples (251) are further processed in one or more subsequent operations, said one or more subsequent operations being performed after each of said respective decoded lines (252) is provided in the output line buffer (234).

12. Method according to any of claims 9 to 11, wherein the inverse wavelet-type filter operation is an inverse filter operation of the LeGall 5/3 type, and wherein the number of intermediate line buffers (232, 233) is equal to two line buffers.

13. Computer program comprising instructions which, when the program is executed by a computer, cause the computer to carry out the method of any of the preceding claims.

14. Encoder (100) comprising an encoding module (130), the encoding module (130) comprising an input line buffer (131), a number of intermediate line buffers (132, 133) and an output line buffer (134), the encoder (100) being configured for performing the method for encoding according to any of claims 1 to 8.

15. Decoder (200) comprising a decoding module (230), the decoding module (230) comprising an input line buffer (231), a number of intermediate line buffers (232, 233) and an output line buffer (234), the decoder (200) being configured for performing the method for decoding according to any of claims 9 to 12.

100

**FIG. 1**

200

## FIG. 2

FIG. 3

FIG. 4

**FIG. 5**

**EUROPEAN SEARCH REPORT**

| | Application Number |
|---|---|
| | EP 25 15 2425 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 898 325 B2 (RICOH KK [JP]) 24 May 2005 (2005-05-24) * column 2 * * column 5 - column 7 * * figures 1, 3 * ----- | 1-15 | INV. H04N19/129 H04N19/423 H04N19/635 |
| X | WO 01/91039 A1 (COMPRESSION ENGINE TECHNOLOGIE [US]) 29 November 2001 (2001-11-29) * page 15 - page 20 * * figures 4-8 * ----- | 1-15 | |
| X | XIONG ET AL: "Efficient array architectures for multi-dimensional lifting-based discrete wavelet transforms", SIGNAL PROCESSING, ELSEVIER, AMSTERDAM, NL, vol. 87, no. 5, 3 February 2007 (2007-02-03), pages 1089-1099, XP005872014, ISSN: 0165-1684, DOI: 10.1016/J.SIGPRO.2006.10.001 * Section 1; Section 2; Section 3 * ----- | 1-15 | TECHNICAL FIELDS SEARCHED (IPC) H04N |

The present search report has been drawn up for all claims

| Place of search | Date of completion of the search | Examiner |
|---|---|---|
| Munich | 1 July 2025 | Morbee, Marleen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 2425

This annex lists the patent family members relating to the patent documents cited in the above-mentioned European search report.
The members are as contained in the European Patent Office EDP file on
The European Patent Office is in no way liable for these particulars which are merely given for the purpose of information.

01-07-2025

| Patent document cited in search report | | Publication date | Patent family member(s) | | Publication date |
|---|---|---|---|---|---|
| US 6898325 | B2 | 24-05-2005 | EP | 1233624 A1 | 21-08-2002 |
| | | | JP | 4177583 B2 | 05-11-2008 |
| | | | JP | 2002359850 A | 13-12-2002 |
| | | | US | 2002168112 A1 | 14-11-2002 |
| | | | US | 2003206656 A1 | 06-11-2003 |
| | | | US | 2003206661 A1 | 06-11-2003 |
| | | | US | 2003210826 A1 | 13-11-2003 |
| | | | US | 2003210827 A1 | 13-11-2003 |
| | | | US | 2003215146 A1 | 20-11-2003 |
| | | | US | 2003215150 A1 | 20-11-2003 |
| | | | US | 2003219166 A1 | 27-11-2003 |
| | | | US | 2004028284 A1 | 12-02-2004 |
| | | | US | 2004057628 A1 | 25-03-2004 |
| | | | US | 2004120585 A1 | 24-06-2004 |
| | | | US | 2005041878 A1 | 24-02-2005 |
| | | | US | 2005163388 A1 | 28-07-2005 |
| WO 0191039 | A1 | 29-11-2001 | NONE | | |

EPO FORM P0459

For more details about this annex : see Official Journal of the European Patent Office, No. 12/82